# EUROPEAN PATENT SPECIFICATION

(11) **EP 4 298 923 B1**
(45) Date of publication and mention of the grant of the patent: **18.06.2025**
(21) Application number: 22906187.4
(22) Date of filing: 21.11.2022
(51) Int. Cl.: A23L 33/16, A23L 33/125, A23P 10/43, A23L 27/30

(54) **METHOD FOR PREVENTING CAKING OF XYLITOL AND CALCIUM ASPARTATE MIXTURE**
VERFAHREN ZUR VERHINDERUNG DES ZUSAMMENBACKENS VON XYLITOL- UND CALCIUMASPARTATMISCHUNGEN
PROCÉDÉ DE PRÉVENTION DE L'AGGLOMÉRATION D'UN MÉLANGE DE XYLITOL ET D'ASPARTATE DE CALCIUM

(30) Priority: 17.12.2021 CN 202111553362
(43) Date of publication of application: 03.01.2024
(73) Proprietor: Zhejiang Huakang Pharmaceutical Co., Ltd., Quzhou, Zhejiang 324302 (CN)
(72) Inventor: MAO, Baoxing, Quzhou City, Zhejiang 324302 (CN); LIAO, Chengjun, Quzhou City, Zhejiang 324302 (CN); WANG, Xiuxiu, Quzhou City, Zhejiang 324302 (CN); WEI, Zhiyao, Zhejiang 324302 (CN); WU, Aijuan, Zhejiang 324302 (CN); LUO, Jiaxing, Quzhou City, Zhejiang 324302 (CN); LIN, Cui, Quzhou City, Zhejiang 324302 (CN); LI, Mian, Santa Clara, California 95054 (US)
(74) Representative: Sun, Yiming
(86) International application number: PCT/CN2022/133107
(87) International publication number: WO 2023/109435

(56) References cited:
- CN-A- 101 537 174
- CN-A- 107 712 538
- CN-A- 107 712 538
- CN-A- 110 393 296
- CN-A- 110 393 296
- CN-A- 111 493 256
- CN-A- 111 493 256
- CN-A- 111 955 749
- CN-A- 114 158 737
- JP-A- H08 196 300
- US-A- 5 536 526

## Description

### Technical Field

The present invention relates to the field of application of sugar alcohol , and in particular, to a method for preventing the agglomeration in a mixture of xylitol and calcium aspartate.

### Background

Calcium aspartate is a chelated form of calcium with a biologically active structure. It is characterized by a stable chemical structure, good water solubility, and high absorption rate in the human body. The calcium aspartate, as a new generation calcium nutrient fortifier, has a wide range of applications in industries such as medicine and food. Xylitol, as a functional sugar alcohol sweetener, is widely used in the food industry.

Some products currently contain both xylitol and calcium aspartate, but there is a certain risk of agglomeration and caking after the two are mixed due to the hygroscopicity of xylitol and the hygroscopicity and viscosity of calcium aspartate. To prevent such condition, some components are often added in some food formulations. For example, CN 201 711 212 727 A and CN 107 712 538 A each discloses a chelated calcium solid beverage containing three components: calcium aspartate, maltodextrin, and xylitol. Maltodextrin helps prevent agglomeration and increase the volume of the product, but the amount of maltodextrin added is relatively large and is not suitable for products that mainly consist of xylitol and calcium aspartate. JP H08 196300 A discloses a xylitol powder resistant to agglomeration.

### Summary

The invention aims to provide a method for preventing the agglomeration in a mixture of xylitol and calcium aspartate, thereby solving the problem of agglomeration after xylitol and calcium aspartate are mixed.

The disclosure provides a method for preventing the agglomeration in a mixture of xylitol and calcium aspartate, thereby preventing and controlling the agglomeration of xylitol and calcium aspartate after they are mixed. The method includes the following steps: adjusting and measuring water activities of xylitol particles and calcium aspartate particles; and mixing calcium aspartate particles with a water activity in a range of 0.50-0.52 and xylitol particles with a water activity in a range of 0.48-0.56; or adding maltitol particles with a weight ratio of 5%-20% to the xylitol particles to a mixture of the calcium aspartate particles and the xylitol particles. Particle sizes of the xylitol particles are in a range of 2.000 mm (10 mesh) to 0.177 mm (80 mesh).

Furthermore, when maltitol particles in a weight ratio of 5% to the xylitol particles are added to the mixture, xylitol particles with a water activity in a range of 0.46 to 0.58 and calcium aspartate particles with a water activity in a range of 0.50 to 0.52 are mixed without agglomeration.

Furthermore, when maltitol particles in a weight ratio of 10% to the xylitol particles are added to the mixture, xylitol particles with a water activity in a range of 0.43 to 0.60 and calcium aspartate particles with a water activity in a range of 0.50 to 0.52 are mixed without agglomeration.

Furthermore, when maltitol particles in a weight ratio of 15% to the xylitol particles are added to the mixture, xylitol particles with a water activity in a range of 0.40 to 0.62 and calcium aspartate particles with a water activity in a range of 0.50 to 0.52 are mixed without agglomeration.

Furthermore, when maltitol particles in a weight ratio of 20% to the xylitol particles are added to the mixture, xylitol particles with a water activity in a range of 0.36 to 0.66 and calcium aspartate particles with a water activity in a range of 0.50 to 0.52 are mixed without agglomeration.

This invention provides a method for preventing agglomeration in a mixture of xylitol and calcium aspartate. The method includes the following steps: adjusting and measuring water activities of xylitol particles and calcium aspartate particles; and mixing calcium aspartate particles with a water activity of 0.52-0.58 and xylitol particles with a water activity of 0.50-0.60 without agglomeration; or adding maltitol particles in a weight ratio of 5%-20% to the xylitol particles in the mixture. The particle sizes of the xylitol particles are in a range of 2.000 mm to 0.177 mm (10 to 80 mesh).

Furthermore, when maltitol particles in a weight ratio of 5% to the xylitol particles are added to the mixture, xylitol particles with a water activity in a range of 0.48 to 0.62 and calcium aspartate particles with a water activity in a range of 0.52 to 0.58 are mixed without agglomeration.

Furthermore, when maltitol particles in a weight ratio of 10% to the xylitol particles are added to the mixture, xylitol particles with a water activity in a range of 0.46 to 0.63 and calcium aspartate particles with a water activity in a range of 0.52 to 0.58 are mixed without agglomeration.

Furthermore, when maltitol particles in a weight ratio of 15% to the xylitol particles are added to the mixture, xylitol particles with a water activity in a range of 0.43 to 0.65 and calcium aspartate particles with a water activity in a range of 0.52 to 0.58 are mixed without agglomeration.

Furthermore, when maltitol particles in a weight ratio of 20% to the xylitol particles are added to the mixture, xylitol particles with a water activity in a range of 0.40 to 0.67 and calcium aspartate particles with a water activity in a range of 0.52 to 0.58 are mixed without agglomeration.

Compared to the prior art, the present invention provides a method for preventing agglomeration in a mixture of xylitol and calcium aspartate, comprising the following steps: first adjusting and measuring water activities of xylitol particles and calcium aspartate particles, then mixing the calcium aspartate particles with a water activity in the range of 0.50-0.52 and the xylitol particles with a water activity in the range of 0.48-0.56, or mixing the calcium aspartate particles with a water activity in the range of 0.52-0.58 and the xylitol particles with a water activity in the range of 0.50-0.60, or adding maltitol particles with a weight ratio of 5%-20% to the xylitol particles to a mixture of the calcium aspartate particles and the xylitol particle. By controlling the water activities of the xylitol particles and calcium aspartate particles, or adding maltitol to the mixture, the present disclosure can effectively prevent agglomeration of the composite product, which is suitable for mixtures of different xylitol raw materials.

### Detailed Description

In order to make the technical problem to be solved, technical solution, and advantageous effects by the present invention more clear and understandable, the following embodiments are described in detail. It should be understood that the specific embodiments described here are only for the purpose of explaining the present disclosure, and are not intended to limit the present disclosure.

### Example 1

This is an exemplary embodiment of a first method for preventing the agglomeration in a mixture of xylitol and calcium aspartate. The first method includes the following steps: adjusting and measuring water activities of xylitol particles and calcium aspartate particles; and mixing calcium aspartate particles with a water activity in a range of 0.50-0.52 and xylitol particles with a water activity in a range of 0.48-0.56; or adding maltitol particles with a weight ratio of 5%-20% relative to the xylitol particles to a mixture of the calcium aspartate particles and the xylitol particles. Particle sizes of the xylitol particles are in a range of 2.000 mm (10 mesh) to 0.177 mm (80 mesh).

The water activity is measured using a water activity meter. The xylitol particles and calcium aspartate particles are dried and adjusted to the corresponding water activities, respectively, which are applied to the following examples.

### Example 2

This is an exemplary embodiment of a second method for preventing the agglomeration in a mixture of xylitol and calcium aspartate. The second method includes the following steps: adjusting and measuring water activities of xylitol particles and calcium aspartate particles; and mixing calcium aspartate particles with a water activity in a range of 0.52-0.58 and xylitol particles with a water activity in a range of 0.50-0.60 such that there is no agglomeration; or adding maltitol particles with a weight ratio of 5%-20% relative to the xylitol particles in a mixture of the calcium aspartate particles and the xylitol particles. The particle sizes of the xylitol particles are in a range of 2.000 mm (10 mesh) to 0.177 mm (80 mesh).

### Example 3

This is an exemplary embodiment of a third method for preventing the agglomeration in a mixture of xylitol and calcium aspartate. The third method includes the following steps: mixing 100g of 2.000 mm to 0.177 mm (10 to 80 mesh) xylitol particles and 8g of calcium aspartate particles with different water activities uniformly and placing a mixture for 4 weeks. When agglomeration occurs, physical operations such as shaking, squeezing or crushing are used to disperse an agglomerated part back to its initial state, and then storage and observation are continued. The results are shown in Table 1.

**Table 1: Agglomeration situation of mixtures of xylitol particles and calcium aspartate particles in different water activity levels.**

| | | | | |
|---|---|---|---|---|
| Water activity of the calcium aspartate particles | 0.50-0.52 | | 0.52-0.58 | |
| Water activity of the xylitol particles | 0.48-0.56 | <0.48 or >0.56 | 0.50-0.60 | <0.50 or >0.60 |
| Week 1 | non-agglo meration | agglomeratio n | non-agglo meration | agglomeratio n |
| Week 2 | non-agglo | agglomeratio | non-agglo | agglomeratio |
| | meration | n | meration | n |
| Week 3 | non-agglo meration | agglomeratio n | non-agglo meration | agglomeratio n |
| Week 4 | non-agglo meration | agglomeratio n | non-agglo meration | agglomeratio n |

From the results in Table 1, it can be seen that:
When the aspartate calcium particles with the water activity in the range of 0.50-0.52 was mixed with the xylitol particles with the water activity in the range of 0.48-0.56, there was no caking after four weeks of storage. However, when the aspartate calcium particles was mixed with xylitol particles with the water activity <0.48 or >0.56, caking occurred after one week of storage, and even if the caked parts were dispersed back to the original state using physical operations, caking still occurred upon continued storage.

When the aspartate calcium particles with the water activity in the range of 0.52 to 0.58 was mixed with the xylitol particles with the water activity in the range of 0.50 to 0.60, there was no caking after storage for four weeks. However, when the aspartate calcium particles was mixed with the xylitol particles with a water activity of <0.50 or>0.60, caking occurred after one week of storage, and even after physical operations, caking still occurred upon continued storage. Furthermore, when the 2.000 mm to 0.177 mm (10-80 mesh) xylitol particles are screened into different particle size ranges such as 2.000 mm to 0.595 mm (10-30 mesh), 0.595 mm to 0.297 mm (30-50 mesh), 0.297 mm to 0.250 mm (50-60 mesh), and 0.250 mm to 0.177 mm (60-80 mesh), the results are consistent with those of the 2.000 mm to 0.177 mm (10-80 mesh).

### Example 4

This is an exemplary embodiment of the fourth method for preventing the agglomeration in a mixture of xylitol and calcium aspartate. The fourth method includes the following steps: mixing 100g of a mixture of 2.000 mm to 0.177 mm (10-80 mesh) xylitol particles with different water activities and maltitol with 8g of calcium aspartate particles evenly for one month to observe their status. The mixture of xylitol and maltitol contains 80%-95% of xylitol and 5%-20% of maltitol. The agglomeration of the mixture was recorded and shown in Table 2. As the proportion of maltitol increased, the water activity range of xylitol particles that do not agglomerate after mixing with calcium aspartate particles expanded, indicating that xylitol particles that were prone to agglomeration may no longer agglomerate after mixing with maltitol and then mixing with calcium aspartate particles.

**Table 2: Water activity range of xylitol particles that do not agglomerate when mixed with calcium aspartate particles**

| Proportion of maltitol in the sugar alcohol mixture | The water activity of xylitol particles (mixed with calcium aspartate particles with a water activity of 0.50-0.52) | Moisture activity of xylitol particles (mixed with calcium aspartate particles with a water activity between 0.52 and 0.58) |
|---|---|---|
| 5% | 0.46-0.58 | 0.48-0.62 |
| 10% | 0.43-0.60 | 0.46-0.63 |
| 15% | 0.40~0.62 | 0.43~0.65 |
| 20% | 0.36-0.66 | 0.40~0.67 |

Furthermore, when the 2.000 mm to 0.177 mm (10-80 mesh) xylitol raw material was sieved into different particle size ranges such as 2.000 mm to 0.595 mm (10-30 mesh), 0.595 mm to 0.297 mm (30-50 mesh), 0.297 mm to 0.250 mm (50-60 mesh), and 0.250 mm to 0.177 mm (60-80 mesh), the results were consistent with those of the 2.000 mm to 0.177 mm (10-80 mesh) xylitol.

## Claims

1. A method for preventing agglomeration in a mixture of xylitol and calcium aspartate, comprising adjusting and measuring water activities of xylitol particles and calcium aspartate particles; and mixing calcium aspartate particles with a water activity in a range of 0.50-0.52 and xylitol particles with a water activity in a range of 0.48-0.56; or adding maltitol particles with a weight ratio of 5%-20% to the xylitol particles to a mixture of the calcium aspartate particles and the xylitol particles, wherein particle sizes of the xylitol particles are in a range of 2.000 mm (10 mesh) to 0.177 mm (80 mesh).

2. The method of claim 1, wherein when maltitol particles in a weight ratio of 5% to the xylitol particles are added to the mixture, xylitol particles with a water activity in a range of 0.46 to 0.58 and calcium aspartate particles with a water activity in a range of 0.50 to 0.52 are mixed without agglomeration.

3. The method of claim 1, wherein when maltitol particles in a weight ratio of 10% to the xylitol particles are added to the mixture, xylitol particles with a water activity in a range of 0.43 to 0.60 and calcium aspartate particles with a water activity in a range of 0.50 to 0.52 are mixed without agglomeration.

4. The method of claim 1, wherein when maltitol particles in a weight ratio of 15% to the xylitol particles are added to the mixture, xylitol particles with a water activity in a range of 0.40 to 0.62 and calcium aspartate particles with a water activity in a range of 0.50 to 0.52 are mixed without agglomeration.

5. The method of claim 1, wherein when maltitol particles in a weight ratio of 20% to the xylitol particles are added to the mixture, xylitol particles with a water activity in a range of 0.36 to 0.66 and calcium aspartate particles with a water activity in a range of 0.50 to 0.52 are mixed without agglomeration.

6. A method for preventing agglomeration in a mixture of xylitol and calcium aspartate, comprising: adjusting and measuring water activities of xylitol particles and calcium aspartate particles; and mixing calcium aspartate particles with a water activity of 0.52-0.58 and xylitol particles with a water activity of 0.50-0.60 without agglomeration; or adding maltitol particles in a weight ratio of 5%-20% to the xylitol particles in the mixture, wherein particle sizes of the xylitol particles are in a range of 2.000 mm (10 mesh) to 0.177 mm (80 mesh).

7. The method of claim 6, wherein when maltitol particles in a weight ratio of 5% to the xylitol particles are added to the mixture, xylitol particles with a water activity in a range of 0.48 to 0.62 and calcium aspartate particles with a water activity in a range of 0.52 to 0.58 are mixed without agglomeration.

8. The method of claim 6, wherein when maltitol particles in a weight ratio of 10% to the xylitol particles are added to the mixture, xylitol particles with a water activity in a range of 0.46 to 0.63 and calcium aspartate particles with a water activity in a range of 0.52 to 0.58 are mixed without agglomeration.

9. The method of claim 6, wherein when maltitol particles in a weight ratio of 15% to the xylitol particles are added to the mixture, xylitol particles with a water activity in a range of 0.43 to 0.65 and calcium aspartate particles with a water activity in a range of 0.52 to 0.58 are mixed without agglomeration.

10. The method of claim 6, wherein when maltitol particles in a weight ratio of 20% to the xylitol particles are added to the mixture, xylitol particles with a water activity in a range of 0.40 to 0.67 and calcium aspartate particles with a water activity in a range of 0.52 to 0.58 are mixed without agglomeration.

## Patentansprüche

1. Verfahren zur Verhinderung von Agglomeration in einer Mischung aus Xylit und Calciumaspartat, umfassend das Einstellen und Messen der Wasseraktivitäten von Xylitpartikeln und Calciumaspartatpartikeln; und das Mischen von Calciumaspartatpartikeln mit einer Wasseraktivität im Bereich von 0,50-0,52 und Xylitpartikeln mit einer Wasseraktivität im Bereich von 0,48-0,56; oder das Zugeben von Maltitpartikeln mit einem Gewichtsverhältnis von 5%-20% zu den Xylitpartikeln zu einer Mischung der Calciumaspartatpartikeln und der Xylitpartikeln, wobei die Partikelgrößen der Xylitpartikeln im Bereich von 2,000mm (10Mesh) bis 0,177 mm (80 Mesh) liegen.

2. Verfahren nach Anspruch 1, wobei beim Zugeben von Maltitpartikeln in einem Gewichtsverhältnis von 5% zu den Xylitpartikeln zur Mischung Xylitpartikeln mit einer Wasseraktivität im Bereich von 0,46 bis 0,58 und Calciumaspartatpartikeln mit einer Wasseraktivität im Bereich von 0,50 bis 0,52 ohne Agglomeration gemischt werden.

3. Verfahren nach Anspruch 1, wobei beim Zugeben von Maltitpartikeln in einem Gewichtsverhältnis von 10% zu den Xylitpartikeln zur Mischung Xylitpartikeln mit einer Wasseraktivität im Bereich von 0,43 bis 0,60 und Calciumaspartatpartikeln mit einer Wasseraktivität im Bereich von 0,50 bis 0,52 ohne Agglomeration gemischt werden.

4. Verfahren nach Anspruch 1, wobei beim Zugeben von Maltitpartikeln in einem Gewichtsverhältnis von 15% zu den Xylitpartikeln zur Mischung Xylitpartikeln mit einer Wasseraktivität im Bereich von 0,40 bis 0,62 und Calciumaspartatpartikeln mit einer Wasseraktivität im Bereich von 0,50 bis 0,52 ohne Agglomeration gemischt werden.

5. Verfahren nach Anspruch 1, wobei beim Zugeben von Maltitpartikeln in einem Gewichtsverhältnis von 20% zu den Xylitpartikeln zur Mischung Xylitpartikeln mit einer Wasseraktivität im Bereich von 0,36 bis 0,66 und Calciumaspartatpartikeln mit einer Wasseraktivität im Bereich von 0,50 bis 0,52 ohne Agglomeration gemischt werden.

6. Verfahren zur Verhinderung von Agglomeration in einer Mischung aus Xylit und Calciumaspartat, umfassend: das Einstellen und Messen der Wasseraktivitäten von Xylitpartikeln und Calciumaspartatpartikeln; und das Mischen von Calciumaspartatpartikeln mit einer Wasseraktivität von 0,52-0,58 und Xylitpartikeln mit einer Wasseraktivität von 0,50-0,60 ohne Agglomeration; oder das Zugeben von Maltitpartikeln in einem Gewichtsverhältnis von 5 %-20 % zu den Xylitpartikeln in der Mischung, wobei die Partikelgrößen der Xylitpartikeln im Bereich von 2,000mm (10Mesh) bis 0,177mm (80Mesh) liegen.

7. Verfahren nach Anspruch 6, wobei beim Zugeben von Maltitpartikeln in einem Gewichtsverhältnis von 5% zu den Xylitpartikeln zur Mischung Xylitpartikeln mit einer Wasseraktivität im Bereich von 0,48 bis 0,62 und Calciumaspartatpartikeln mit einer Wasseraktivität im Bereich von 0,52 bis 0,58 ohne Agglomeration gemischt werden.

8. Verfahren nach Anspruch 6, wobei beim Zugeben von Maltitpartikeln in einem Gewichtsverhältnis von 10% zu den Xylitpartikeln zur Mischung Xylitpartikeln mit einer Wasseraktivität im Bereich von 0,46 bis 0,63 und Calciumaspartatpartikeln mit einer Wasseraktivität im Bereich von 0,52 bis 0,58 ohne Agglomeration gemischt werden.

9. Verfahren nach Anspruch 6, wobei beim Zugeben von Maltitpartikeln in einem Gewichtsverhältnis von 15% zu den Xylitpartikeln zur Mischung Xylitpartikeln mit einer Wasseraktivität im Bereich von 0,43 bis 0,65 und Calciumaspartatpartikeln mit einer Wasseraktivität im Bereich von 0,52 bis 0,58 ohne Agglomeration gemischt werden.

10. Verfahren nach Anspruch 6, wobei beim Zugeben von Maltitpartikeln in einem Gewichtsverhältnis von 20% zu den Xylitpartikeln zur Mischung Xylitpartikeln mit einer Wasseraktivität im Bereich von 0,40 bis 0,67 und Calciumaspartatpartikeln mit einer Wasseraktivität im Bereich von 0,52 bis 0,58 ohne Agglomeration gemischt werden.

## Revendications

1. Procédé de prévention de l'agglomération dans un mélange de xylitol et d'aspartate de calcium, comprenant l'ajustement et la mesure des activités de l'eau des particules de xylitol et des particules d'aspartate de calcium ; et le mélange de particules d'aspartate de calcium ayant une activité de l'eau comprise entre 0,50 et 0,52 et de particules de xylitol ayant une activité de l'eau comprise entre 0,48 et 0,56 ; ou l'ajout de particules de maltitol dans un rapport pondéral de 5% à 20% par rapport aux particules de xylitol à un mélange des particules d'aspartate de calcium et des particules de xylitol, les tailles de particules du xylitol étant comprises entre 2,000 mm (10 mesh) et 0,177 mm (80 mesh).

2. Le procédé selon la revendication 1, dans lequel, lorsque des particules de maltitol dans un rapport pondéral de 5% par rapport aux particules de xylitol sont ajoutées au mélange, des particules de xylitol ayant une activité de l'eau comprise entre 0,46 et 0,58 et des particules d'aspartate de calcium ayant une activité de l'eau comprise entre 0,50 et 0,52 sont mélangées sans agglomération.

3. Le procédé selon la revendication 1, dans lequel, lorsque des particules de maltitol dans un rapport pondéral de 10% par rapport aux particules de xylitol sont ajoutées au mélange, des particules de xylitol ayant une activité de l'eau comprise entre 0,43 et 0,60 et des particules d'aspartate de calcium ayant une activité de l'eau comprise entre 0,50 et 0,52 sont mélangées sans agglomération.

4. Le procédé selon la revendication 1, dans lequel, lorsque des particules de maltitol dans un rapport pondéral de 15% par rapport aux particules de xylitol sont ajoutées au mélange, des particules de xylitol ayant une activité de l'eau comprise entre 0,40 et 0,62 et des particules d'aspartate de calcium ayant une activité de l'eau comprise entre 0,50 et 0,52 sont mélangées sans agglomération.

5. Le procédé selon la revendication 1, dans lequel, lorsque des particules de maltitol dans un rapport pondéral de 20% par rapport aux particules de xylitol sont ajoutées au mélange, des particules de xylitol ayant une activité de l'eau comprise entre 0,36 et 0,66 et des particules d'aspartate de calcium ayant une activité de l'eau comprise entre 0,50 et 0,52 sont mélangées sans agglomération.

6. Procédé de prévention de l'agglomération dans un mélange de xylitol et d'aspartate de calcium, comprenant : l'ajustement et la mesure des activités de l'eau des particules de xylitol et des particules d'aspartate de calcium ; et le mélange de particules d'aspartate de calcium ayant une activité de l'eau de 0,52 à 0,58 et de particules de xylitol ayant une activité de l'eau de 0,50 à 0,60 sans agglomération ; ou l'ajout de particules de maltitol dans un rapport pondéral de 5% à 20% par rapport aux particules de xylitol dans le mélange, les tailles de particules du xylitol étant comprises entre 2,000 mm (10 mesh) et 0,177 mm (80 mesh).

7. Le procédé selon la revendication 6, dans lequel, lorsque des particules de maltitol dans un rapport pondéral de 5% par rapport aux particules de xylitol sont ajoutées au mélange, des particules de xylitol ayant une activité de l'eau comprise entre 0,48 et 0,62 et des particules d'aspartate de calcium ayant une activité de l'eau comprise entre 0,52 et 0,58 sont mélangées sans agglomération.

8. Le procédé selon la revendication 6, dans lequel, lorsque des particules de maltitol dans un rapport pondéral de 10% par rapport aux particules de xylitol sont ajoutées au mélange, des particules de xylitol ayant une activité de l'eau comprise entre 0,46 et 0,63 et des particules d'aspartate de calcium ayant une activité de l'eau comprise entre 0,52 et 0,58 sont mélangées sans agglomération.

9. Le procédé selon la revendication 6, dans lequel, lorsque des particules de maltitol dans un rapport pondéral de 15% par rapport aux particules de xylitol sont ajoutées au mélange, des particules de xylitol ayant une activité de l'eau comprise entre 0,43 et 0,65 et des particules d'aspartate de calcium ayant une activité de l'eau comprise entre 0,52 et 0,58 sont mélangées sans agglomération.

10. Le procédé selon la revendication 6, dans lequel, lorsque des particules de maltitol dans un rapport pondéral de 20% par rapport aux particules de xylitol sont ajoutées au mélange, des particules de xylitol ayant une activité de l'eau comprise entre 0,40 et 0,67 et des particules d'aspartate de calcium ayant une activité de l'eau comprise entre 0,52 et 0,58 sont mélangées sans agglomération.
